# EUROPEAN PATENT SPECIFICATION

(11) **EP 4 203 146 B1**
(45) Date of publication and mention of the grant of the patent: **20.08.2025**
(21) Application number: 21892396.9
(22) Date of filing: 15.11.2021
(51) Int. Cl.: H01M 10/6567, H01M 10/6556, H01M 10/6553, H01M 10/6551, H01M 10/647, H01M 10/613, H01M 50/296, H01M 50/502, H01M 50/211, H01M 50/249

(54) **BATTERY MODULE HAVING COOLING STRUCTURE USING INSULATING OIL, AND BATTERY PACK AND VEHICLE COMPRISING SAME**
BATTERIEMODUL MIT KÜHLSTRUKTUR MIT ISOLIERÖL SOWIE BATTERIEPACK UND FAHRZEUG DAMIT
MODULE DE BATTERIE COMPRENANT UNE STRUCTURE DE REFROIDISSEMENT UTILISANT UNE HUILE ISOLANTE, ET BLOC-BATTERIE ET VÉHICULE LE COMPRENANT

(30) Priority: 16.11.2020 KR 20200153016
(43) Date of publication of application: 28.06.2023
(73) Proprietor: LG Energy Solution, Ltd., Seoul 07335 (KR); Renault s.a.s, 92100 Boulogne Billancourt (FR)
(72) Inventor: JU, Eun-Ah, Daejeon 34122 (KR); YUN, Hyeon-Ki, Daejeon 34122 (KR); MUN, Jeong-O, Daejeon 34122 (KR); TANNENBERGER, Guenter, 85123 Pobenhausen (DE); JANKE, Jan, 74336 Brackenheim (DE); HARASZTOSI, Uwe, 74172 Neckarsulm (DE)
(74) Representative: Goddar, Heinz J.
(86) International application number: PCT/KR2021/016668
(87) International publication number: WO 2022/103229

(56) References cited:
- EP-A1- 3 716 392
- JP-A- 2009 009 853
- JP-B2- 4 362 321
- KR-A- 20170 084 522
- KR-A- 20170 084 522
- KR-A- 20180 106 421
- KR-A- 20190 064 887
- KR-A- 20190 064 887

## Description

### TECHNICAL FIELD

The present disclosure relates to a battery module having a cooling structure using insulating oil and a battery pack and a vehicle including the battery module, and more particularly, to a battery module having a structure in which insulating oil introduced into a module housing flows through a space between an edge of a battery cell and the module housing to cool battery cells, and a battery pack and a vehicle including the battery module.

### BACKGROUND ART

In the case of a battery module using an indirect water cooling method using cooling water, because cooling water does not directly contact a battery cell but indirectly contacts the battery cell through a module housing in which the battery cell is accommodated, there is a limit to its cooling performance. Also, because a cooling device such as a separate heat sink should be provided outside the module housing to form a passage for cooling, a volume of the battery module is inevitably increased, which may cause loss in terms of energy density.

In order to solve the problems of the indirect water cooling method, there is a need to develop a battery module having a cooling structure in which insulating oil for cooling may be directly introduced into a module housing and may directly contact a battery cell.

In the case of a battery module having a direct cooling structure using insulating oil, it is very important to secure a fluid passage structure for efficient cooling, and maintain airtightness so that insulating oil does not leak to the outside of a module housing and an end plate. Document KR20190064887 A is relevant prior art.

### DISCLOSURE

### Technical Problem

The present disclosure is designed to solve the problems of the related art, and therefore the present disclosure is directed to securing a path through which insulating oil introduced into a module housing passes through a bus bar frame assembly, smoothly moves toward a cell stack assembly, and smoothly flows in a longitudinal direction of a battery module.

However, the technical purpose to be solved by the present disclosure is not limited to the above, and other objects not mentioned herein will be clearly understood by one of ordinary skill in the art from the following disclosure.

### Technical Solution

In one aspect of the present disclosure, there is provided a battery module according to independent claim 1.

The cooling fin may include: a body contact portion located between adjacent battery cells; and an edge cover portion bent at any one of an upper end and a lower end of the body contact portion to cover an edge of the battery cell.

The front bus bar frame assembly and the rear bus bar frame assembly may include a plurality of insulating oil holes formed at positions corresponding to insulating oil passages formed between the module housing and an edge of the battery cell and between the edge cover portion and an edge of the battery cell.

Insulating oil introduced through the insulating oil inlet into the module housing may pass through the insulating oil hole formed in the front bus bar frame assembly and may be introduced into the insulating oil passage.

The insulating oil passing through the insulating oil passage may pass through the insulating oil hole formed in the rear bus bar frame assembly, and may be discharged to outside of the module housing through the insulating oil outlet.

The front bus bar frame assembly and the rear bus bar frame assembly may include guide ribs respectively formed at an upper end and a lower end and extending toward the cell stack assembly.

The cooling fin may further include a pair of fixing portions each having a shape corresponding to the guide rib, formed on both end portions of the edge cover portion in a longitudinal direction of the edge cover portion, and each coupled to the guide rib.

The battery module may further include a pair of terminal assemblies each including an external terminal located outside the front sealing plate, and a stud passing through the front sealing plate and configured to electrically connect the external terminal to the battery cell.

The front bus bar frame assembly may include: a bus bar frame; a plurality of bus bars fixed to the bus bar frame, and connected to an electrode lead of the battery cell; and a pair of internal terminals each fixed to the bus bar frame, and connected to an electrode lead of the battery cell located at an outermost position from among the battery cells provided in the cell stack assembly.

The terminal assembly may further include a terminal spacer inserted into a terminal hole formed in the front sealing plate, wherein the stud is fixed to the internal terminal and passes through the terminal spacer.

The terminal assembly may further include a fastening nut fastened to the stud passing through the terminal spacer and the external terminal and configured to closely fix the external terminal to the terminal spacer.

The terminal assembly may further include a first O-ring covering an outer circumferential surface of the terminal spacer and located between an inner surface of the front sealing plate and the internal terminal.

The stud may be press-fitted by passing through the internal terminal, wherein the terminal assembly further includes a second O-ring located around the stud and located between the internal terminal and the bus bar frame.

In another aspect of the present disclosure, there are also provided a battery pack and a vehicle including the battery module.

### Advantageous Effects

According to an aspect of the present disclosure, insulating oil introduced into a module housing may pass through a bus bar frame assembly, may smoothly move toward a cell stack assembly, and may smoothly flow in a longitudinal direction of a battery module in the module housing. Also, according to an aspect of the present disclosure, leakage of insulating oil flowing inside a module housing may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery module according to an embodiment of the present disclosure.
FIG. 2 is an exploded perspective view illustrating the battery module according to an embodiment of the present disclosure.
FIG. 3 is a cross-sectional view taken along line A-A' of FIG. 1.
FIG. 4 is a view illustrating a state where a front end plate and a front sealing plate are removed in the battery module of FIG. 1.
FIGS. 5 and 6 are views illustrating a flow of insulating oil for cooling.
FIGS. 7 and 8 are views illustrating a coupling relationship between a cooling fin and a battery cell according to the present disclosure.
FIG. 9 is a perspective view illustrating a cooling fin according to the present disclosure.
FIG. 10 is a view illustrating a coupling structure between a bus bar frame assembly and a cooling fin according to the present disclosure.
FIGS. 11 and 12 are views illustrating a structure of a terminal assembly according to the present disclosure.

### BEST MODE

Hereinafter, preferred embodiments of the present disclosure will be described in detail with reference to the accompanying drawings.

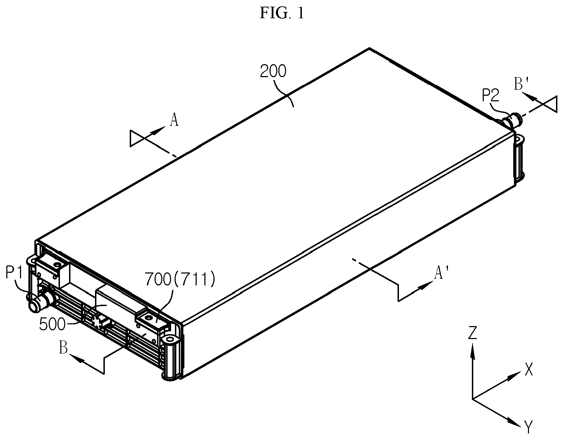

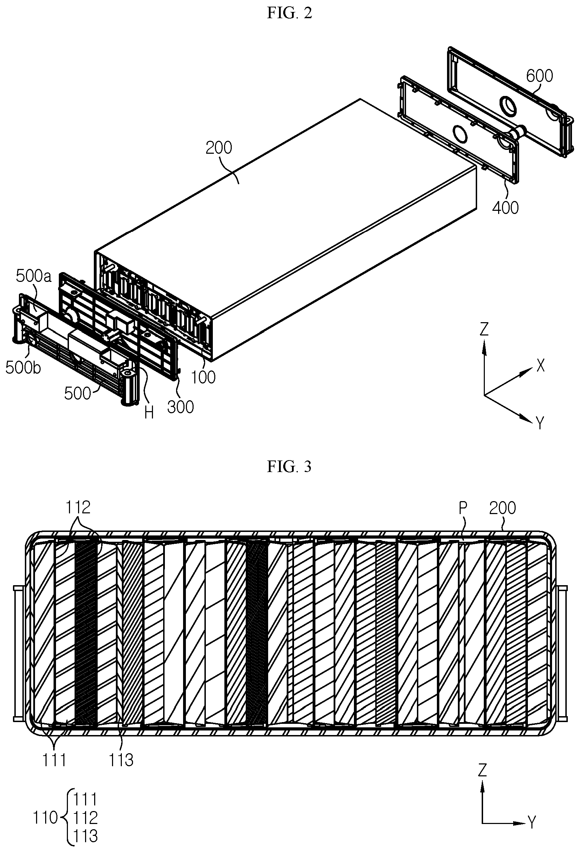

Referring to FIGS. 1 and 2, a battery module according to an embodiment of the present disclosure includes a sub-module 100, a module housing 200, a front sealing plate 300, a rear sealing plate 400, and a pair of terminal assemblies 700, and may further include a front end plate 500 and a rear end plate 600.

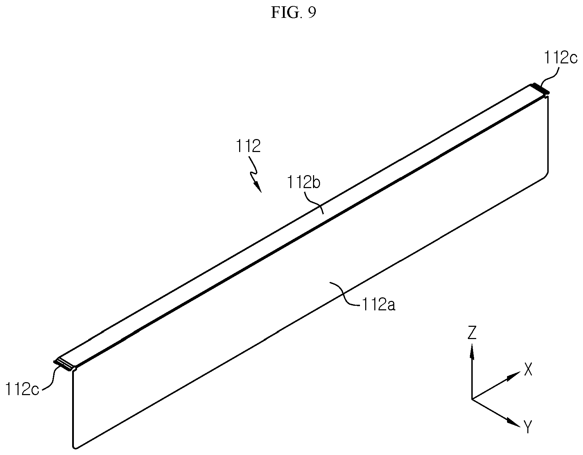

Referring to FIGS. 2 through 9, the sub-module 100 includes a cell stack assembly 110, a front bus bar frame assembly 120A, and a rear bus bar frame assembly 120B.

The cell stack assembly 110 includes a plurality of battery cells 111 and a plurality of cooling fins 112 located between adjacent battery cells 111, and may further include at least one buffer pad 113 located between adjacent battery cells 111. The battery cell 111, the cooling fin 112, and the buffer pad 113 are stacked upright in a direction perpendicular to the ground (surface parallel to an X-Y plane) to constitute one cell stack assembly 110.

The battery cell 111 may be a pouch-type battery cell including a pair of electrode leads 111a drawn out in opposite directions in a longitudinal direction (direction parallel to an X-axis).

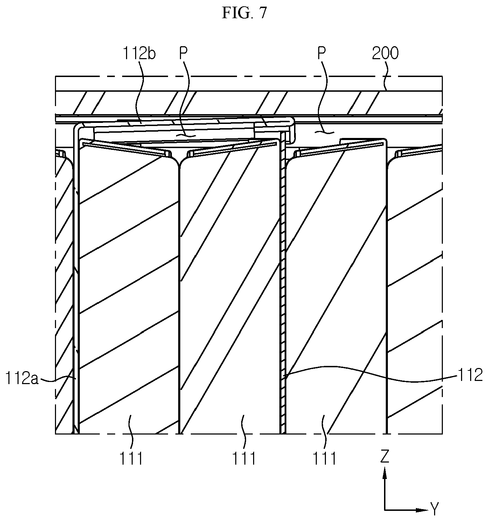

Referring to FIGS. 7 through 9, the cooling fin 112 includes a body contact portion 112a located between adjacent battery cells 111 and an edge cover portion 112b bent at any one of an upper end and a lower end of the body contact portion 112a to cover an edge of the battery cell 111. Edges of the battery cell 111 refer to both side surfaces of a body of the battery cell 111 in a width direction, that is, in a height direction (direction parallel to a Z-axis) of the battery module. Also, the cooling fin 112 may further include a pair of fixing portions 112c formed on both end portions of the edge cover portion 112b in a longitudinal direction (direction parallel to the X-axis) of the edge cover portion 112b.

The body contact portion 112a is located between bodies of a pair of adjacent battery cells 111 and directly contacts the bodies of the battery cells 111. The body contact portion 112a is configured to rapidly conducts heat generated from a body of the battery cell 111, that is, a region where an electrode assembly (not shown) is accommodated, in a width direction of the cooling fin 112, that is, the height direction (direction parallel to the Z-axis) of the battery module, toward the edge cover portion 112b. As such, the heat conducted toward the edge cover portion 112b moves in a longitudinal direction (direction parallel to the X-axis) of the battery module due to insulating oil flowing through an insulating oil passage P formed between the edge of the battery cell 111 and the edge cover portion 112b and is discharged to the outside of the battery module.

The edge cover portion 112b may not only form the insulating oil passage P as described above but also, when external impact is applied and the cell stack assembly 110 moves in a vertical direction (direction parallel to the Z-axis) in the module housing 200, may absorb the external impact.

The fixing portion 112c has a shape corresponding to that of a guide rib 121b described below. The fixing portion 112c may be coupled to the guide rib 121b, to guide fastening between the bus bar frame assembly 120A, 120B and the cell stack assembly 110 including the cooling fin 112.

The buffer pad 113 may be located between adjacent battery cells 111 and may absorb volume expansion according to swelling of the battery cells 111.

The front bus bar frame assembly 120A and the rear bus bar frame assembly 120B may be coupled to a side and the other side of the cell stack assembly 110 in a longitudinal direction of the cell stack assembly 110 to electrically connect the plurality of battery cells 111. The front bus bar frame assembly 120A and the rear bus bar frame assembly 120B have substantially the same structure except that the front bus bar frame assembly 120A includes an internal terminal 123 and the rear bus bar frame assembly 120B does not include the internal terminal 123. Accordingly, a detailed description of a structure of the rear bus bar frame assembly 120B will be omitted, and a structure of the front bus bar frame assembly 120A will be mainly described.

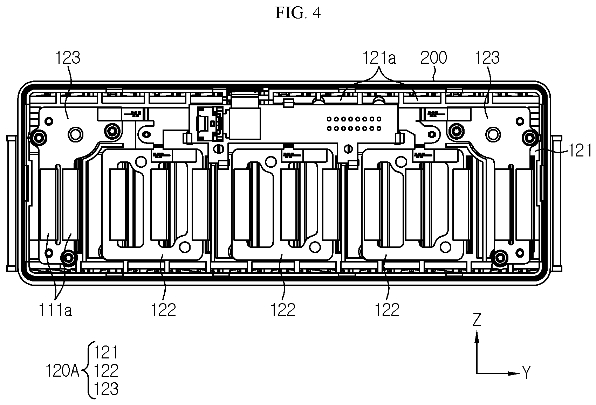

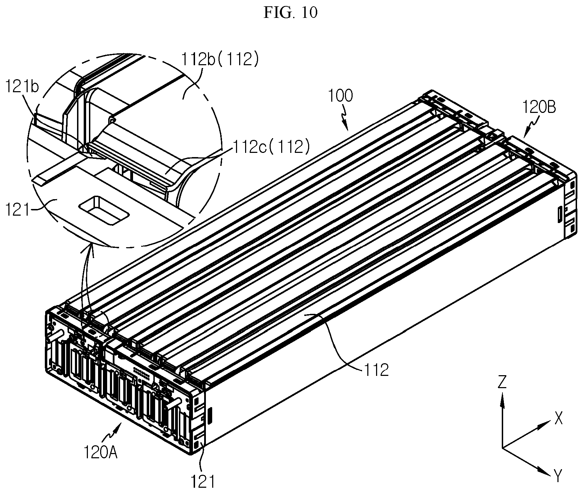

Referring to FIGS. 4 through 10, the front bus bar frame assembly 120A includes a bus bar frame 121, a plurality of bus bars 122, and a pair of internal terminals 123. The bus bar frame 121 covers a side of the cell stack assembly 110 in the longitudinal direction (direction parallel to the X-axis) of the cell stack assembly 110.

The bus bar frame 121 includes a plurality of insulating oil holes 121a. The insulating oil hole 121a functions as a path through which insulating oil introduced through an inlet P1 provided at the front sealing plate 300 into the module housing 200 may pass through the bus bar frame 121 and may be introduced into the cell stack assembly 110.

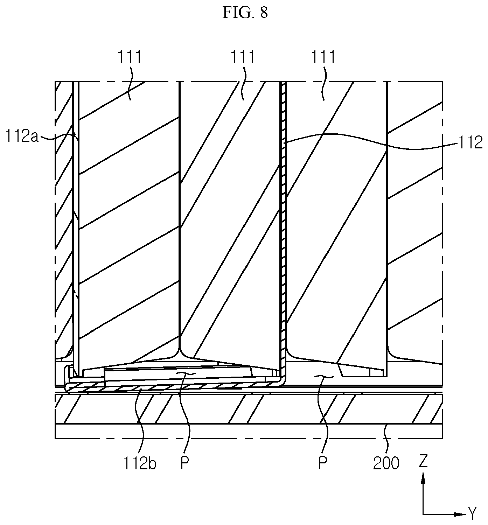

As shown in FIGS. 7 and 8, the insulating oil passage P is formed between the module housing 200 and an edge of the battery cell 111, and between the edge cover portion 112b and an edge of the battery cell 111. Accordingly, the insulating oil hole 121a is formed at a position corresponding to the insulating oil passage P formed between the module housing 200 and the edge of the battery cell 111 and between the edge cover portion 112b of the cooling fin 112 and the edge of the battery cell.

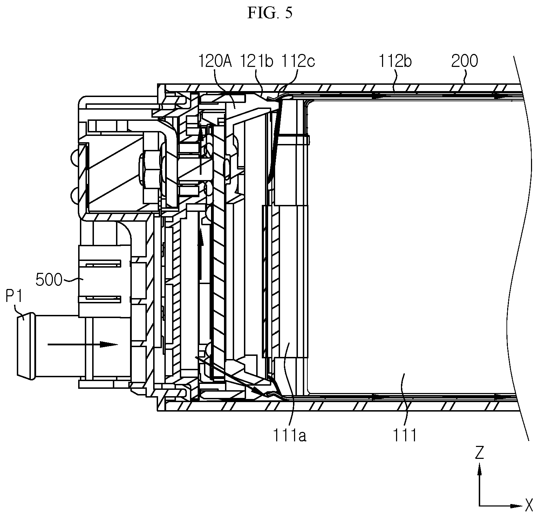

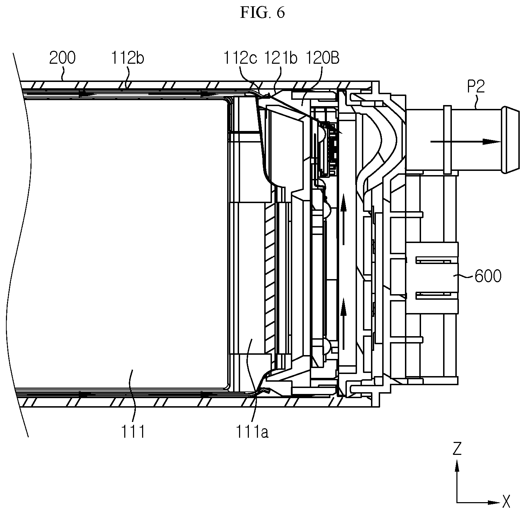

Insulating oil introduced through the insulating oil hole 121a formed in the front bus bar frame assembly 120A into the cell stack assembly 110 moves in an arrow direction (see FIGS. 5 and 6) through the insulating oil passage P toward the rear bus bar frame assembly 120B. The insulating oil moving toward the rear bus bar frame assembly 120B is introduced through the insulating oil hole 121a formed in the rear bus bar frame 120B into the rear sealing plate 400, and is discharged to the outside of the battery module through an outlet P2 provided at the rear sealing plate 400. In this process, the insulating oil directly contacts the electrode lead 111a of the battery cell 111, and indirectly contacts a body of the battery cell 111, to cool the battery cell 111.

The bus bar 122 is fixed to the bus bar frame 121, and is coupled to the electrode lead 111a drawn out through a lead slit formed in the bus bar frame 121 to electrically connect the plurality of battery cells 111.

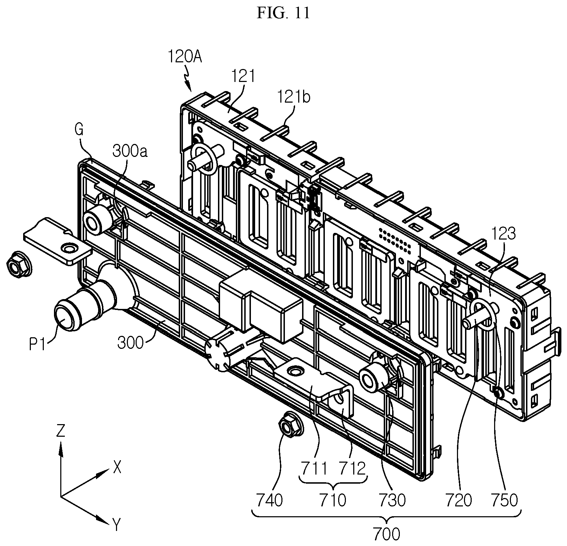

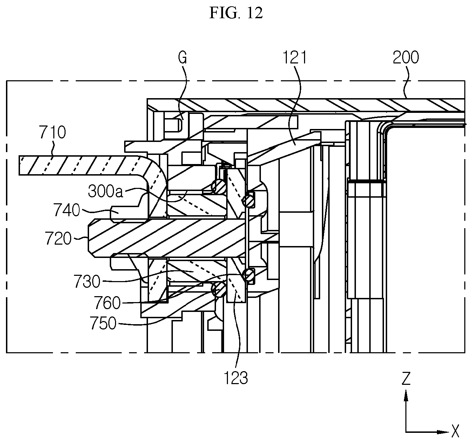

The internal terminal 123 is fixed to the bus bar frame 121, and is coupled to the electrode lead 111a of the battery cell 111 located at an outermost position from among the battery cells 111 provided in the cell stack assembly 110. The internal terminal 123 functions as a high-potential terminal. The internal terminal located on a side of the bus bar frame 121 in a longitudinal direction of the bus bar frame 121 functions as a positive electrode high-potential terminal, and the internal terminal 123 located on the other side of the bus bar frame 121 in the longitudinal direction of the bus bar frame 121 functions as a negative electrode high-potential terminal. The internal terminal 123 is electrically connected to an external terminal 710 described below (see FIGS. 11 and 12).

Referring to FIGS. 5 through 10, the bus bar frame 121 of the front bus bar frame assembly 120A and the bus bar frame 121 of the rear bus bar frame assembly 120B include a plurality of guide ribs 121b formed at an upper end and a lower end in the longitudinal direction (direction parallel to a Y-axis). The guide rib 121b extends toward the cell stack assembly 110. The guide rib 121b is formed at a position corresponding to the fixing portion 112c of the cooling fin 112.

As described above, the fixing portions 112c having a shape corresponding to the guide ribs 121b are formed on both end portions of the edge cover portion of the cooling fin 112 in the longitudinal direction (direction parallel to the X-axis) of the edge cover portion 112b. A movement of the cooling fin 112 in the vertical direction (direction parallel to the Z-axis) and the longitudinal direction (direction parallel to the X-axis) is limited by the guide rib 121b and the fixing portion 112c. Accordingly, when the front bus bar frame assembly 120A and the rear bus bar frame assembly 120B are coupled to the cell stack assembly 110, a coupling position may be guided, thereby increasing assembly convenience.

Referring to FIGS. 1 through 6, the sub-module 100 including the cell stack assembly 110, the front bus bar frame assembly 120A, and the rear bus frame assembly 120B is accommodated in the module housing 200. The module housing 200 has a shape in which a side and the other side of the module housing 200 in a longitudinal direction (direction parallel to the X-axis) are open.

Referring to FIGS. 5, 6, 11, and 12, the front sealing plate 300 covers an opening portion formed on a side of the module housing 200 in the longitudinal direction (direction parallel to the X-axis) of the module housing 200. The front sealing plate 300 includes the insulating oil inlet P1 through which insulating oil is introduced. In order to prevent leakage of insulating oil, a gasket G may be located between an edge surface of the front sealing plate 300 and an inner surface of the module housing 200 (see FIG. 12).

The front sealing plate 300 includes a pair of terminal holes 300a through which a component for electrical connection between the external terminal 710 described below and the internal terminal 123 provided in the front bus bar frame assembly 120A may pass. The terminal hole 300a is formed at a position corresponding to the internal terminal 123.

Referring to FIG. 6, the rear sealing plate 400 covers an opening portion on the other side of the module housing 200 in the longitudinal direction (direction parallel to the X-axis) of the module housing 200, and includes the insulating oil outlet P2 through which insulating oil is discharged. Like in the front sealing plate 300, in order to prevent leakage of insulating oil, a gasket G may be located between an edge surface of the rear sealing plate 400 and an inner surface of the module housing 200.

The front sealing plate 300 and the rear sealing plate 400 may be formed of an insulating resin for electrical insulation.

Referring to FIGS. 11 and 12, the terminal assembly 700 includes the external terminal 710 located outside the front sealing plate 300 and a stud 720 configured to electrically connect the external terminal 710 to the battery cell 111. The stud 720 is fixed to the internal terminal 123. The stud 720 may pass through the internal terminal 123 and may be fixed to the internal terminal 123 by using a press-fitting method. The stud 720 fixed to the internal terminal 123 is drawn outward through the terminal hole 300a formed in the front sealing plate 300 and is coupled to the external terminal 710.

The terminal assembly 700 may further include a terminal spacer 730 having a ring shape and inserted into the terminal hole 300a formed in the front sealing plate 300. The terminal spacer 730 may be formed of a metal material. When the terminal spacer 730 is provided, the stud 720 passes through the terminal pacer 730.

The terminal assembly 700 may further include a fastening nut 740 for fastening the external terminal 710 to the stud 720. The fastening nut 740 is fastened to the stud 720 passing through the terminal spacer 730 and a fastening portion 712 of the external terminal 710, to closely fix the fastening portion 712 of the external terminal 710 to the terminal spacer 730. Accordingly, the internal terminal 123 and the external terminal 710 are electrically connected to each other through the terminal spacer 730.

The terminal assembly 700 may further include a first O-ring 750 covering an outer circumferential surface of the terminal spacer 730 and located between an inner surface of the front sealing plate 300 and the internal terminal 123. Referring to FIGS. 11 and 12, the first O-ring 750 prevents insulating oil introduced into a space between the front sealing plate 300 and the bus bar frame 121 from leaking to the outside of the front sealing plate 300 through a space between an inner surface of the insulating oil hole 300a and the terminal spacer 730.

Also, the terminal assembly 700 may further include a second O-ring 760 located around the stud 720 press-fitted to the internal terminal 123 and exposed to a space between the internal terminal 123 and the bus bar frame 121, the second O-ring 760 being located between the internal terminal 123 and the bus bar frame 121. The second O-ring 760 prevents insulating oil introduced into a space between the front sealing plate 300 and the bus bar frame 121 from leaking to the outside of the front sealing plate 300 through a space between the internal terminal 123 and the stud 720 and a space between an inner surface of the terminal spacer 730 and the stud 720.

Referring to FIGS. 1, 2, 5, and 6, the front end plate 500 covers the front sealing plate 300 and is fixed to the module housing 200. The rear end plate 600 covers the rear sealing plate 400 and is fixed to the module housing 200.

The front end plate 500 includes a terminal exposing portion 500a configured to expose a connecting portion 711 of the external terminal 710 to be exposed to the outside of the front end plate 500 and an inlet exposing portion 500b configured to expose the insulating oil inlet P1 to be exposed to the outside of the front end plate 500. The rear end plate 600 includes an outlet exposing portion 600b configured to expose the insulating oil outlet P2 to be exposed to the outside of the rear end plate 600.

When the front end plate 500 and the rear end plate 600 are applied to the battery module according to the present disclosure, a gasket for preventing leakage of insulating oil may be applied to a coupling portion between the front end plate 500 and the module housing 200 and a coupling portion between the rear end plate 600 and the module housing 200.

A battery pack and a vehicle according to an embodiment of the present disclosure include the battery module according to the present disclosure as described above. The battery pack includes at least one battery module and a pack housing in which the at least one battery module is accommodated. The battery module may be fastened to the pack housing through a fastening hole H formed in the front end plate 500 and/or the rear end plate 600. That is, a space where a fastening means such as a bolt for fastening between the battery module and the pack housing is inserted may be provided. When the battery pack according to the present disclosure includes a plurality of battery modules, the plurality of battery modules may be fastened to one another through the fastening hole H formed in the front end plate 500 and/or the rear end plate 600.

## Claims

1. A battery module comprising:
a sub-module (100) comprising a cell stack assembly (110) comprising a plurality of battery cells (111) and a cooling fin (112) located between adjacent battery cells (111), a front bus bar frame assembly (120A) coupled to a side of the cell stack assembly (110) in a longitudinal direction (X) of the cell stack assembly (110), and a rear bus bar frame assembly (120B) coupled to the other side of the cell stack assembly (110) in the longitudinal direction (X) of the cell stack assembly (110);
a module housing (200) in which the sub-module (100) is accommodated;
a front sealing plate (300) covering an opening portion formed on a side of the module housing (200) in a longitudinal direction (X) of the module housing (200) and comprising an insulating oil inlet (P1); and
a rear sealing plate (400) covering an opening portion formed on the other side of the module housing (200) in the longitudinal direction (X) of the module housing (200) and comprising an insulating oil outlet (P2),
**characterized in that** the cooling fin (112) comprises:
a body contact portion (112a) located between adjacent battery cells (111); and
an edge cover portion (112b) bent at any one of an upper end and a lower end of the body contact portion (112a) to cover an edge of one of the battery cells (111),
wherein the body contact portion (112a) directly contact bodies of the battery cells (111),
wherein insulating oil passages (P) are formed between the module housing (200) and an edge of the battery cell (111) and between the edge cover portion (112b) and the edge of the battery cell (111).

2. The battery module of claim 1, wherein the front bus bar frame assembly (120A) and the rear bus bar frame assembly (120B) comprise a plurality of insulating oil holes (121a) formed at positions corresponding to the insulating oil passages (P).

3. The battery module of claim 2, wherein insulating oil introduced through the insulating oil inlet (P1) into the module housing (200) passes through the insulating oil hole (121a) formed in the front bus bar frame assembly (120A) and is introduced into the insulating oil passage (P).

4. The battery module of claim 3, wherein the insulating oil passing through the insulating oil passage (P) passes through the insulating oil hole (121a) formed in the rear bus bar frame assembly (120B), and is discharged to outside of the module housing (200) through the insulating oil outlet (P2).

5. The battery module of claim 1, wherein the front bus bar frame assembly (120A) and the rear bus bar frame assembly (120B) comprise guide ribs (121b) respectively formed at an upper end and a lower end and extending toward the cell stack assembly (110).

6. The battery module of claim 5, wherein the cooling fin (112) further comprises a pair of fixing portions (112c) each having a shape corresponding to the guide rib (121b), formed on both end portions of the edge cover portion (112b) in a longitudinal direction (X) of the edge cover portion (112b), and each coupled to the guide rib (121b).

7. The battery module of claim 1, further comprising a pair of terminal assemblies (700) each comprising an external terminal (710) located outside the front sealing plate (300), and a stud (720) passing through the front sealing plate (300) and configured to electrically connect the external terminal (710) to the battery cell (111).

8. The battery module of claim 7, wherein the front bus bar frame assembly (120A) comprises:
a bus bar frame (121);
a plurality of bus bars (122) fixed to the bus bar frame (121), and connected to an electrode lead (111a) of the battery cell (111); and
a pair of internal terminals (123) each fixed to the bus bar frame (121), and connected to an electrode lead (111a) of the battery cell (111) located at an outermost position from among the battery cells (111) provided in the cell stack assembly (110).

9. The battery module of claim 8, wherein the terminal assembly (700) further comprises a terminal spacer (730) inserted into a terminal hole (300a) formed in the front sealing plate (300),
wherein the stud (720) is fixed to the internal terminal (123) and passes through the terminal spacer (730).

10. The battery module of claim 9, wherein the terminal assembly (700) further comprises a fastening nut (740) fastened to the stud (720) passing through the terminal spacer (730) and the external terminal (710) and configured to closely fix the external terminal (710) to the terminal spacer (730).

11. The battery module of claim 10, wherein the terminal assembly (700) further comprises a first O-ring (750) covering an outer circumferential surface of the terminal spacer (730) and located between an inner surface of the front sealing plate (300) and the internal terminal (123).

12. The battery module of claim 11, wherein the stud (720) is press-fitted by passing through the internal terminal (123),
wherein the terminal assembly (700) further comprises a second O-ring located around the stud (720) and located between the internal terminal (123) and the bus bar frame (121).

13. A battery pack comprising the battery module according to any one of claims 1 through 12.

14. A vehicle comprising the battery module according to any one of claims 1 through 12.

## Patentansprüche

1. Batteriemodul aufweisend:
ein Submodul (100) aufweisend eine Zellenstapelanordnung (110) aufweisend mehrere Batteriezellen (111) und eine Kühlrippe (112), die zwischen benachbarten Batteriezellen (111) angeordnet ist, eine vordere Sammelschienenrahmenanordnung (120A), die mit einer Seite der Zellenstapelanordnung (110) in einer Längsrichtung (X) der Zellenstapelanordnung (110) gekoppelt ist, und eine hintere Sammelschienenrahmenanordnung (120B), die mit der anderen Seite der Zellenstapelanordnung (110) in der Längsrichtung (X) der Zellenstapelanordnung (110) gekoppelt ist;
ein Modulgehäuse (200), in dem das Submodul (100) aufgenommen ist;
eine vordere Verschlussplatte (300), die einen Öffnungsabschnitt abdeckt, der aufeiner Seite des Modulgehäuses (200) in einer Längsrichtung (X) des Modulgehäuses (200) ausgebildet ist und einen Isolieröleinlass (P1) aufweist; und
eine hintere Verschlussplatte (400), die einen Öffnungsabschnitt abdeckt, der auf der anderen Seite des Modulgehäuses (200) in der Längsrichtung (X) des Modulgehäuses (200) ausgebildet ist und einen Isolierölauslass (P2) aufweist,
**dadurch gekennzeichnet, dass** die Kühlrippe (112) aufweist:
einen Körperkontaktabschnitt (112a), der zwischen benachbarten Batteriezellen (111) angeordnet ist; und
einen Randabdeckungsabschnitt (112b), der an einem von einem oberen Ende und einem unteren Ende des Körperkontaktabschnitts (112a) abgebogen ist, um einen Rand von einer der Batteriezellen (111) abzudecken,
wobei der Körperkontaktabschnitt (112a) Körper der Batteriezellen (111) direkt kontaktiert,
wobei Isolierölpassagen (P) zwischen dem Modulgehäuse (200) und einem Rand der Batteriezelle (111) und zwischen dem Randabdeckungsabschnitt (112b) und dem Rand der Batteriezelle (111) ausgebildet sind.

2. Batteriemodul nach Anspruch 1, wobei die vordere Sammelschienenrahmenanordnung (120A) und die hintere Sammelschienenrahmenanordnung (120B) mehrere Isolieröllöcher (121a) aufweisen, die an Positionen ausgebildet sind, die den Isolierölpassagen (P) entsprechen.

3. Batteriemodul nach Anspruch 2, wobei Isolieröl, das durch den Isolieröleinlass (P1) in das Modulgehäuse (200) eingeführt wird, durch das in der vorderen Sammelschienenrahmenanordnung (120A) ausgebildete Isolierölloch (121a) hindurchgeht und in die Isolierölpassage (P) eingeführt wird.

4. Batteriemodul nach Anspruch 3, wobei das Isolieröl, das durch die Isolierölpassage (P) hindurchgeht, durch das in der hinteren Sammelschienenrahmenanordnung (120B) ausgebildete Isolierölloch (121a) hindurchgeht und durch den Isolierölauslass (P2) nach außerhalb des Modulgehäuses (200) abgegeben wird.

5. Batteriemodul nach Anspruch 1, wobei die vordere Sammelschienenrahmenanordnung (120A) und die hintere Sammelschienenrahmenanordnung (120B) Führungsrippen (121b) aufweisen, die jeweils an einem oberen Ende und einem unteren Ende ausgebildet sind und sich in Richtung der Zellenstapelanordnung (110) erstrecken.

6. Batteriemodul nach Anspruch 5, wobei die Kühlrippe (112) ferner ein Paar Befestigungsabschnitte (112c) aufweist, die jeweils eine Form aufweisen, die der Führungsrippe (121b) entspricht, an beiden Endabschnitten des Randabdeckungsabschnitts (112b) in einer Längsrichtung (X) des Randabdeckungsabschnitts (112b) ausgebildet sind und jeweils mit der Führungsrippe (121b) gekoppelt sind.

7. Batteriemodul nach Anspruch 1, ferner aufweisend ein Paar Anschlussanordnungen (700), die jeweils einen externen Anschluss (710), der außerhalb der vorderen Verschlussplatte (300) angeordnet ist, und einen Stift (720) aufweisen, der durch die vordere Verschlussplatte (300) hindurchgeht und konfiguriert ist, um den externen Anschluss (710) elektrisch mit der Batteriezelle (111) zu verbinden.

8. Batteriemodul nach Anspruch 7, wobei die vordere Sammelschienenrahmenanordnung (120A) aufweist:
einen Sammelschienenrahmen (121);
mehrere Sammelschienen (122), die an dem Sammelschienenrahmen (121) befestigt sind und mit einer Elektrodenleitung (111a) der Batteriezelle (111) verbunden sind; und
ein Paar interne Anschlüsse (123), die jeweils an dem Sammelschienenrahmen (121) befestigt sind und mit einer Elektrodenleitung (111a) der Batteriezelle (111) verbunden sind, die an einer äußersten Position von den Batteriezellen (111) angeordnet ist, die in der Zellenstapelanordnung (110) bereitgestellt sind.

9. Batteriemodul nach Anspruch 8, wobei die Anschlussanordnung (700) ferner einen Anschlussabstandshalter (730) aufweist, der in ein Anschlussloch (300a) eingesetzt ist, das in der vorderen Verschlussplatte (300) ausgebildet ist,
wobei der Stift (720) an dem internen Anschluss (123) befestigt ist und durch den Anschlussabstandshalter (730) hindurchgeht.

10. Batteriemodul nach Anspruch 9, wobei die Anschlussanordnung (700) ferner eine Befestigungsmutter (740) aufweist, die an dem Stift (720) befestigt ist, durch den Anschlussabstandshalter (730) und den externen Anschluss (710) hindurchgeht und konfiguriert ist, um den externen Anschluss (710) eng an dem Anschlussabstandshalter (730) zu befestigen.

11. Batteriemodul nach Anspruch 10, wobei die Anschlussanordnung (700) ferner einen ersten O-Ring (750) aufweist, der eine Außenumfangsfläche des Anschlussabstandshalters (730) abdeckt und zwischen einer Innenfläche der vorderen Verschlussplatte (300) und dem internen Anschluss (123) angeordnet ist.

12. Batteriemodul nach Anspruch 11, wobei der Stift (720) durch Hindurchgehen durch den internen Anschluss (123) eingepresst ist,
wobei die Anschlussanordnung (700) ferner einen zweiten O-Ring aufweist, der um den Stift (720) angeordnet ist und zwischen dem internen Anschluss (123) und dem Sammelschienenrahmen (121) angeordnet ist.

13. Batteriepack aufweisend das Batteriemodul nach einem der Ansprüche 1 bis 12.

14. Fahrzeug aufweisend das Batteriemodul nach einem der Ansprüche 1 bis 12.

## Revendications

1. Module de batterie comprenant :
un sous-module (100) comprenant un ensemble d'empilement de cellules (110) comprenant une pluralité de cellules de batterie (111), et une ailette de refroidissement (112) située entre des cellules de batterie adjacentes (111), un ensemble de cadre de barre omnibus antérieur (120A) couplé à un côté de l'ensemble d'empilement de cellules (110) dans une direction longitudinale (X) de l'ensemble d'empilement de cellules (110), et un ensemble de cadre de barre omnibus postérieur (120B) couplé à l'autre côté de l'ensemble d'empilement de cellules (110) dans la direction longitudinale (X) de l'ensemble d'empilement de cellules (110) ;
un boîtier de module (200) dans lequel le sous-module (100) est installé ;
une plaque d'étanchéité antérieure (300) couvrant une partie d'ouverture formée sur un côté du boîtier de module (200) dans une direction longitudinale (X) du boîtier de module (200), et comprenant une entrée d'huile isolante (P1) ; et
une plaque d'étanchéité postérieure (400) couvrant une partie d'ouverture formée sur l'autre côté du boîtier de module (200), dans la direction longitudinale (X) du boîtier de module (200), et comprenant une sortie d'huile isolante (P2),
**caractérisé en ce que** l'ailette de refroidissement (112) comprend :
une partie de contact avec le corps (112a) située entre des cellules de batterie adjacentes (111) ; et
une partie de couvercle de bord (112b) pliée à l'une quelconque d'une partie supérieure et d'une partie inférieure de la partie de contact avec le corps (112a) pour couvrir un bord d'une des cellules de batterie (111),
la partie de contact avec le corps (112a) étant en contact direct avec des corps des cellules de batterie (111),
des conduits d'huile isolante (P) étant pratiqués entre le boîtier du module (200) et un bord de la cellule de batterie (111), et entre la partie du couvercle de bord (112b) et le bord de la cellule de batterie (111).

2. Module de batterie selon la revendication 1, l'ensemble de cadre de barre omnibus antérieur (120A) et l'ensemble de cadre de barre omnibus postérieur (120B) comprenant une pluralité de trous d'huile isolante (121a) réalisés dans des positions correspondant aux conduits d'huile isolante (P).

3. Module de batterie selon la revendication 2, l'huile isolante introduite par l'entrée d'huile isolante (P1) dans le boîtier du module (200) passant par le trou d'huile isolante (121a) agencé dans l'ensemble de cadre de barre omnibus antérieur (120A), et étant introduite dans le conduit d'huile isolante (P).

4. Module de batterie selon la revendication 3, l'huile isolante passant par le conduit d'huile isolante (P) traversant le trou d'huile isolante (121a) agencé dans l'ensemble de cadre de barre omnibus postérieur (120B), et étant évacuée hors du boîtier de module (200) à travers la sortie d'huile isolante (P2).

5. Module de batterie selon la revendication 1, l'ensemble de cadre de barre omnibus antérieur (120A) et l'ensemble de cadre de barre omnibus postérieur (120B) comprenant des nervures de guidage (121b) pratiquées respectivement à une extrémité supérieure et une extrémité inférieure, et s'étendant vers l'ensemble d'empilement de cellules (110).

6. Module de batterie selon la revendication 5, l'ailette de refroidissement (112) comprenant en outre une paire de parties de fixation (112c) ayant chacune une forme correspondant à la nervure de guidage (121b), formées sur les deux parties terminales de la partie de couvercle de bord (112b) dans une direction longitudinale (X) de la partie de couvercle de bord (112b), et chacune étant couplée à la nervure de guidage (121b).

7. Module de batterie selon la revendication 1, comprenant en outre une paire d'ensembles de bornes (700) comprenant chacun une borne externe (710), située à l'extérieur de la plaque d'étanchéité antérieure (300), et un goujon (720) traversant la plaque d'étanchéité antérieure (300) et configuré pour connecter électriquement la borne externe (710) à la cellule de batterie (111).

8. Module de batterie selon la revendication 7, l'ensemble de cadre de barre omnibus antérieur (120A) comprenant :
un cadre de barre omnibus (121) ;
une pluralité de barres omnibus (122) fixées au cadre de barre omnibus (121), et connectées à un conducteur d'électrode (111a) de la cellule de batterie (111) ; et
une paire de bornes internes (123) fixées chacune au cadre de la barre omnibus (121) et reliées à un conducteur d'électrode (111a) de la cellule de batterie (111) situé dans une position extérieure parmi les cellules de batterie (111) agencées dans l'ensemble d'empilement de cellules (110).

9. Module de batterie selon la revendication 8, l'ensemble de bornes (700) comprenant en outre un espaceur de borne (730) insérée dans un trou de borne (300a) réalisé dans la plaque d'étanchéité antérieure (300),
le goujon (720) étant fixé à la borne interne (123) et passant à travers l'espaceur de borne (730).

10. Module de batterie selon la revendication 9, l'ensemble de bornes (700) comprenant en outre un écrou de fixation (740) fixé au goujon (720) traversant l'espaceur de borne (730) et la borne externe (710), et configuré pour fixer étroitement la borne externe (710) à l'espaceur de borne (730).

11. Module de batterie selon la revendication 10, l'ensemble de bornes (700) comprenant en outre un premier joint torique (750) couvrant une surface circonférentielle extérieure de l'espaceur de borne (730) et situé entre une surface intérieure de la plaque d'étanchéité antérieure (300) et la borne interne (123).

12. Module de batterie selon la revendication 11, le goujon (720) étant emmanché à force en passant à travers la borne interne (123),
l'ensemble de borne (700) comprenant en outre un deuxième joint torique positionné autour du goujon (720), et situé entre la borne interne (123) et le cadre de barre omnibus (121).

13. Bloc-batterie comprenant le module de batterie selon une quelconque des revendications 1 à 12.

14. Véhicule comprenant le module de batterie selon une quelconque des revendications 1 à 12.
